# EUROPÄISCHE PATENTSCHRIFT

(11) **EP 2 154 090 B1**
(45) Veröffentlichungstag und Bekanntmachung des Hinweises auf die Patenterteilung: **18.12.2013**
(21) Anmeldenummer: 09166229.6
(22) Anmeldetag: 23.07.2009
(51) Int. Cl.: B65G 47/08, B65G 47/51

(54) **Vorrichtung und Verfahren zum Bilden von Stückgüterzusammenstellungen**
Device and method for grouping articles
Dispositif et procédé destinés à grouper des articles

(30) Priorität: 11.08.2008 DE 102008037188
(43) Veröffentlichungstag der Anmeldung: 17.02.2010
(73) Patentinhaber: Krones AG, 93073 Neutraubling (DE)
(72) Erfinder: Hüttner, Johann, 84066 Mallersdorf (DE); Seger, Martin, 92318 Neumarkt (DE)
(74) Vertreter: Hannke, Christian

(56) Entgegenhaltungen:
- EP-A1- 1 721 844
- WO-A1-2004/096455
- WO-A1-2007/123401
- FR-A1- 2 745 804
- JP-A- 2 270 716
- US-A1- 2002 125 107

## Beschreibung

Die vorliegende Erfindung bezieht sich auf eine Vorrichtung in einem Verfahren zum Bilden von Stückgüterzusammenstellungen. Die vorliegende Erfindung wird dabei unter Bezugnahme auf Behältnisse für Getränke und insbesondere so genannte "Pouches" beschrieben, das heißt, verformbare Behältnisse für Getränke, wie beispielsweise Safttüten. Die Erfindung ist jedoch auch auf andere Stückgüterzusammenstellungen und insbesondere auf Behältnisse anwendbar.

Aus dem Stand der Technik sind die unterschiedlichsten Vorrichtungen zum Bilden derartiger Stückgüterzusammenstellungen bekannt. Dabei ist es beispielsweise bekannt, die Stückgüter in einer Reihe an einen Querschieber zu liefern, der anschließend diese Reihen quer zur Transportrichtung schiebt und auf diese Weise Stückgüterzusammenstellungen bildet, die mehrere nebeneinander angeordnete Reihen von Stückgütern aufweisen. Diese Zusammenstellungen können beispielsweise gegenüber weiteren Stückgüterzusammenstellungen mittels Zwischenlagen abgetrennt werden. Dabei ist es bekannt, dass die Transportbänder, welche die Stückgüter an den Querschieber liefern, in einem diskontinuierlichen Betrieb arbeiten, ggfs. sogar zeitweise stillstehen.

Der vorliegenden Erfindung liegt die Aufgabe zugrunde, eine Vorrichtung zum Bilden von Stückgüterzusammenstellungen zu schaffen, welche einen verbesserten und insbesondere kontinuierlichen Arbeitsbetrieb für das Bilden von Stückgüterzusammenstellungen ermöglichen.

Dies wird erfindungsgemäß durch eine Vorrichtung nach Anspruch 1 und einem Verfahren nach Anspruch 13 erreicht. Vorteilhafte Ausführungsformen und Weiterbildungen sind Gegenstand der Unteransprüche.

Aus der US 2002/0125107, Fig. 11, ist eine Vorrichtung bekannt, bei der Stückgüter aus einer einteiligen und mit gleichbleibender Geschwindigkeit bewegten Transporteinrichtung auf eine veränderbare Pufferungseinrichtung abgeleitet und von dieser zurückgeleitet werden, um unterschiedliche Stückgutabstände auszugleichen. Diese Vorrichtung weist keine Zusammenstellungseinrichtung auf.

Eine erfindungsgemäße Vorrichtung zum Bilden von Stückgüterzusammenstellungen weist eine erste Transporteinrichtung auf, welche die Stückgüter entlang eines vorgegebenen Transportpfades mit einer ersten Transportgeschwindigkeit transportiert. Weiterhin ist eine zweite Transporteinrichtung vorgesehen, welche die Stückgüter entlang eines vorgegebenen Transportpfades mit einer zweiten Transportgeschwindigkeit führt und welche entlang des Transportpfades stromabwärts bezüglich der ersten Transporteinrichtung angeordnet ist sowie eine Zusammenstellungseinrichtung, welche entlang des Transportpfades stromabwärts bezüglich der zweiten Transporteinrichtung angeordnet ist und aus einer Vielzahl von Stückgütern Zusammenstellungen bildet.

Erfindungsgemäß weist die Vorrichtung eine Pufferungseinrichtung auf, welche die Stückgüter entlang einer veränderbaren Pufferstrecke transportiert und welche auf dem Transportpfad der Stückgüter zwischen der ersten Transporteinrichtung und der zweiten Transporteinrichtung angeordnet ist, wobei sich die erste Transportgeschwindigkeit und die zweite Transportgeschwindigkeit wenigstens zeitweise unterscheiden und die Pufferungseinrichtung wenigstens zeitweise durch unterschiedliche Geschwindigkeiten entstehende Stückgüterströme bzw. Stückgüter aufnimmt.

Bei den Transporteinrichtungen kann es sich dabei um jegliche Einrichtungen handeln, welche die Stückgüter entlang des Transportpfades bewegen bzw. transportieren. Bevorzugt handelt es sich bei den Transporteinrichtungen wenigstens teilweise um Transportbänder oder Transportketten bzw. um solche Transporteinrichtungen, welche die Stückgüter nicht vereinzelt führen.

Aus dem Stand der Technik sind derartige Pufferungseinrichtungen bekannt und dienen dabei üblicherweise dazu, bei Auftreten von Störungen einen weiteren Betrieb der Vorrichtung aufrecht zu erhalten. Dabei wird beispielsweise eine derartige Pufferungseinrichtung im Störfall leer gefahren oder mit Stückgütern befüllt. Im Rahmen der vorliegenden Erfindung wird vorgeschlagen, die Pufferungseinrichtung bewusst einzusetzen, um Unterschiede der Transportgeschwindigkeit, welche gewollt auftreten, um die Stückgüterzusammenstellungen zu bilden, durch die besagte Pufferungseinrichtung auszugleichen.

Damit findet jede Pufferungseinrichtung, insbesondere auch im normalen Arbeitsbetrieb, Anwendung. Die Erfindung ist daher auch auf die Verwendung einer Pufferungseinrichtung für eine Vorrichtung zum Bilden von Stückgüterzusammenstellungen gerichtet. Dabei ist es auch möglich, direkt im Anschluss an den Auslauf der Pufferungseinrichtung eine Vorrichtung zum positionsgenauen Ablegen von Stückgütern und insbesondere Weichverpackungen, anzuschließen. Bei der Vorrichtung kann es sich hierbei um die oben erwähnte zweite Transporteinrichtung handeln, die beispielsweise in Form eines Servomotor - getriebenen Transporteurs realisiert ist. Wenn die Stückgüter dabei beispielsweise einreihig ankommen, positioniert sich die nachfolgende Transporteinrichtung bzw. der nachfolgende Servoantrieb derart, dass eine exakte einreihige Ablage nach einem Verpackungsschema erfolgt. Es wäre jedoch auch möglich, die Stückgüter mehrreihig mit den genannten Transporteinrichtungen zu führen.

Vorzugsweise unterscheiden sich die erste Transportgeschwindigkeit und die zweite Transportgeschwindigkeit daher im regulären Arbeitsbetrieb wenigstens zeitweise voneinander. Insbesondere bei der zweiten Transportgeschwindigkeit handelt es sich dabei bevorzugt nicht um eine kontinuierliche Geschwindigkeit, sondern es ist möglich, dass die zweite Transporteinrichtung die Stückgüter zeitlich abschnittsweise transportiert und zwischen diesen Abschnitten Ruhephasen hinsichtlich des Transports entstehen. Dann wird in dieser Ausführungsform vorgeschlagen, die Pufferungseinrichtung nicht, wie im Stand der Technik bei Störfällen, sondern bei regulärem Arbeitsbetrieb einzusetzen. Zusätzlich ist es jedoch auch möglich, die Pufferungseinrichtung bei Auftreten von Störfällen einzusetzen.

Bei einer weiteren vorteilhaften Ausführungsform ist die zweite Transportgeschwindigkeit zeitweise größer als die erste Transportgeschwindigkeit und zeitweise kleiner als die erste Transportgeschwindigkeit. In den zeitlichen Abschnitten, in denen die zweite Transportgeschwindigkeit größer als ist die erste Transportgeschwindigkeit, ist es dabei wiederum möglich, die Pufferungseinrichtung zu entleeren, wo hingegen in denjenigen Phasen, in denen die zweite Transportgeschwindigkeit kleiner ist als die erste Transportgeschwindigkeit, die Pufferungseinrichtung wieder mit den Stückgütern befüllt wird, wobei hierbei die zweite Transportgeschwindigkeit auch Null betragen kann. Bevorzugt erfolgt eine Befüllung und Entleerung der Pufferungseinrichtung periodisch.

Bei einer weiteren vorteilhaften Ausführungsform ist die Pufferungseinrichtung, bevorzugt entlang einer Transportstrecke der ersten Transporteinrichtung, verschiebbar und bei einer weiteren vorteilhaften Ausführungsform ist die Pufferungseinrichtung auch entlang einer Transportstrecke der zweiten Transporteinrichtung verschiebbar. Auf diese Weise kann durch ein Verschieben dieser Pufferungseinrichtung entlang der Transportstrecke insgesamt die Transportstrecke für das Stückgut verlängert oder verkürzt werden und damit mehr oder weniger Stückgüter in der Pufferungseinrichtung oder mit Hilfe der Pufferungseinrichtung aufgenommen werden. Die besagten Transportstrecken sind mithin sowohl Bestandteil der jeweiligen Transporteinrichtungen als auch der Pufferungseinrichtung. Bevorzugt sind die beiden genannten Transportstrecken parallel zueinander und die Stückgüter werden auf ihnen vorteilhaft gegenläufig transportiert.

Bei einer weiteren vorteilhaften Ausführungsform ist zwischen der zweiten Transporteinrichtung und der Zusammenstellungseinrichtung eine weitere Transporteinrichtung angeordnet, welche bevorzugt Bestandteil der Zusammenstellungseinrichtung ist. Dabei ist vorzugsweise das Niveau der zweiten Transporteinrichtung höher als das der weiteren Transporteinrichtung. Dies bedeutet, dass die Stückgüter leicht von der zweiten Transporteinrichtung auf die weitere Transporteinrichtung hinüber geschoben werden können. Bevorzugt werden die Stückgüter mit einer zweiten Transporteinrichtung und der weiteren Transporteinrichtung in der gleichen Transportrichtung transportiert.

Bei einer weiteren vorteilhaften Ausführungsform weist die weitere Transporteinrichtung Abstandshalteeinrichtungen auf, welche zwischen den Stückgütern konstante Abstände erzeugen. Diese konstanten Abschnitte werden dabei auf die Zusammenstellungseinrichtung überführt und anschließend beispielsweise mittels eines Querschiebers in ihrer Gesamtheit verschoben. Daher weist bevorzugt die Zusammenstellungseinrichtung eine Verschiebeeinrichtung auf, welche Gruppen von Stückgütern in einer von einer Transportrichtung abweichenden Richtung verschiebt. Vorzugsweise verschiebt diese Verschiebeeinrichtung die Gruppen von Stückgütern, welche bevorzugt in genau festgelegten Abständen zueinander angeordnet sind, senkrecht zu der Transportrichtung. Es wäre jedoch auch möglich, je nach Anwendungsfall unterschiedliche Abstände zwischen den Stückgütern zu erzeugen.

Bei einer weiteren vorteilhaften Ausführungsform weist die Zusammenstellungseinrichtung wenigstens zwei unabhängig voneinander angetriebene oder antreibbare Transportbänder auf. Das erste Transportband dient dabei zum Antransportieren der Stückgüter und mittels der Verschiebeeinrichtung werden die Stückgüter auf ein weiteres Transportband überführt. Nach Bilden einer vollständigen Zusammenstellung kann diese mit sämtlichen Transportbändern weiter transportiert werden.

Vorzugsweise weist die Pufferungseinrichtung einen verschiebbaren Schlitten aus. Durch ein Verschieben des Schlittens werden - wie oben erwähnt - die Transportwege verlängert oder verkürzt. Vorzugsweise wird dabei der Schlitten periodisch hin- und herbewegt. Insbesondere im regulären Arbeitsbetrieb ist die Bewegung periodisch.

In einer weiteren vorteilhaften Ausführungsform weist die Vorrichtung eine Abstandserfassungseinrichtung auf, welche entlang des Transportpfades stromaufwärts bezüglich der Pufferungseinrichtung angeordnet ist und welche Abstände zwischen den Stückgütern erfasst. Auf diese Weise kann bestimmt werden, ob zwischen den einzelnen Stückgütern bereits ausreichende Abstände vorliegen, bzw. diese Abstände können genauer ermittelt werden.

Vorzugsweise handelt es sich bei der Abstandserfassungseinrichtung um eine optische Abstandserfassungseinrichtung, beispielsweise eine oder mehrere Lichtschranken aufweisende Einrichtung, wobei diese Lichtschranken versetzt zueinander sein können oder die jeweiligen Strahlengänge sich auch schneiden können.

Vorzugsweise weist die Vorrichtung eine Positionserfassungseinrichtung auf, welche entlang des Transportpfades stromabwärts bezüglich der Pufferungseinrichtung angeordnet ist und welche Positionen der Stückgüter, insbesondere gegenüber der zweiten oder der weiteren Transporteinrichtung, erfasst. In Reaktion auf Ausgangssignale der Positionserfassungseinrichtung können die zweite Transporteinrichtung und die weitere Transporteinrichtung derart gesteuert werden, dass die Stückgüter in vorgegebener Weise auf die Zusammenstellungseinrichtung bzw. deren Transportband gelangen.

Die vorliegende Erfindung ist weiterhin auf ein Verfahren zum Bilden von Stückgüterzusammenstellungen gerichtet, wobei in einer ersten Transporteinrichtung die Stückgüter entlang eines vorgegebenen Transportpfades und einer ersten Transportgeschwindigkeit transportiert werden, und mit einer zweiten Transporteinrichtung, welche entlang des Transportpfades stromabwärts bezüglich der ersten Transporteinrichtung angeordnet ist, entlang des vorgegebenen Transportpfades mit einer zweiten Transportgeschwindigkeit transportiert werden und wobei mit einer Zusammenstellungseinrichtung, welche entlang des Transportpfades stromabwärts bezüglich der zweiten Transporteinrichtung angeordnet ist, aus einer Vielzahl von Stückgütern Zusammenstellungen gebildet werden.

Erfindungsgemäß werden die Stückgüter mit einer Pufferungseinrichtung, welche zwischen der ersten Transporteinrichtung und der zweiten Transporteinrichtung angeordnet ist, entlang einer veränderbaren Pufferstrecke transportiert, wobei sich die erste Transportgeschwindigkeit und die zweite Transportgeschwindigkeit mindestens zeitweise unterscheiden und die Pufferungseinrichtung wenigstens zeitweise die durch unterschiedliche Geschwindigkeiten entstehenden Stückgüterströme aufnimmt. Vorzugsweise nimmt die Pufferungseinrichtung die besagten Stückgüterströme zeitweise auf und gibt sie zeitweise wieder ab.

Bei einem bevorzugten Verfahren wird die Pufferungseinrichtung bzw. ein Teil derselben entlang des Transportpfades verschoben. Dabei kann die Pufferungseinrichtung beispielsweise als dynamischer Regelschlitten ausgeführt sein.

Vorzugsweise ist ein seitlich angeordneter Reihenschieber vorgesehen, der - wie oben erwähnt - die abgelegten Reihen vervielfacht, damit im Anschluss ein Roboterarm lagenweise die Stückgüter bzw. Pouches abheben kann. Über die Pufferungseinrichtung sind die jeweiligen Transporteinrichtungen bzw. Maschinen entkoppelt, und auf diese Weise ist ein variabler Abstand zwischen den Stückgütern einstellbar. Vorzugsweise wird die Transportbewegung der zweiten Transporteinrichtung wenigstens zeitweise angehalten. Die Transportbewegung wird vorzugsweise angehalten, um Reihen von Stückgütern mit Hilfe der Zusammenstellungseinrichtung zusammenzustellen.

Weitere vorteilhafte Ausführungsformen ergeben sich aus den beigefügten Zeichnungen:

Darin zeigen:
- Fig. 1: eine schematische Darstellung einer erfindungsgemäßen Vorrichtung;
- Fig. 2: eine Detailansicht der Zusammenstellungseinrichtung aus Fig. 1;
- Fig. 3: eine Detailansicht einer weiteren Ausführungsform einer Zusammen- Stellungseinrichtung; und
- Fig. 4: eine weitere Detailansicht der Vorrichtung aus Fig. 1

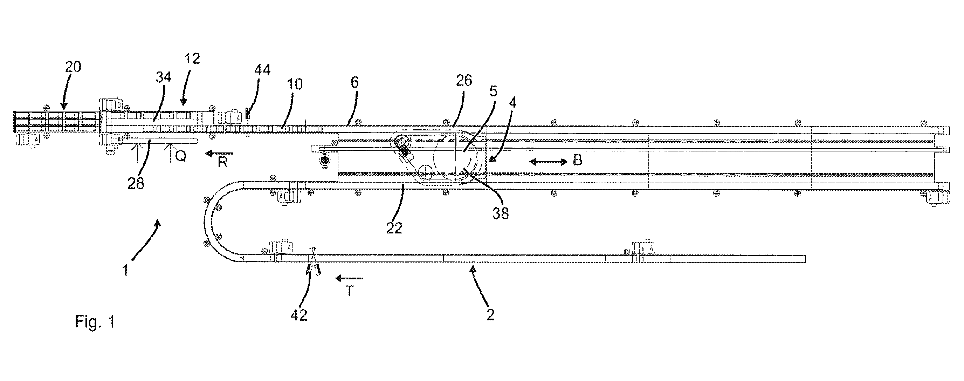

Fig. 1 zeigt eine erfindungsgemäße Vorrichtung 1 zum Bilden von Stückgüterzusammenstellungen 20. Diese Vorrichtung 1 weist eine erste Transporteinrichtung 2 auf, welche die Stückgüter 10 entlang eines Transportpfades T führt. Dabei führt diese erste Transporteinrichtung 2 die Stückgüter 10 in Richtung einer Transportstrecke 22. Diese Transportstrecke 22 ist dabei Bestandteil einer Pufferungseinrichtung 4. Die Pufferungseinrichtung 4 weist bei der in Fig. 1 gezeigten Ausführungsform eine Umlenkeinheit 5 auf, welche die Behältnisse 10 von der Transportstrecke 22 auf eine Transportstrecke 26, welche Bestandteil einer zweiten Transporteinrichtung 6 ist, überführt.

Dabei liegen die Transportstrecke 22 und die Transportstrecke 26 auf dem gleichen Höhenniveau. Ein Beispiel für eine derartige Pufferungseinrichtung wird beispielsweise in der DE 20 2004 012 848 U1 der Anmelderin beschrieben. Der Gegenstand dieser Offenbarung wird hiermit durch Bezugnahme auch zum Gegenstand der vorliegenden Anmeldung gemacht. An diese zweite Transporteinrichtung 6, welche die Behältnisse ebenfalls entlang des Transportpfades T führt, schließt sich wiederum eine Zusammenstellungseinrichtung 12 an, welche aus den Reihen von Stückgütern Stückgüterzusammenstellungen 20 bildet. Diese Zusammenstellungseinrichtung 12 weist ein Transportband 32 auf, welches dazu dient, um die Stückgüter 10 mit einem vorgegebenen Abstand zueinander transportieren zu können

Die Pufferungseinrichtung 4, bzw. insbesondere die Umlenkeinheit 5 ist dabei auf einem Schlitten 38 in der Richtung B beweglich. Je nach Position der Pufferungseinrichtung 4 bezüglich der Transportstrecken 22 und 26 wird damit insgesamt die Transportstrecke für die Stückgüter verlängert oder verkürzt. Da, wie oben erwähnt, die beiden Transporteinrichtungen 2 und 6 die Stückgüter 10 zeitweise mit unterschiedlichen Geschwindigkeiten fördern, können durch ein Verschieben der Pufferungseinrichtung 4 diese Differenzen der Geschwindigkeiten ausgeglichen werden.

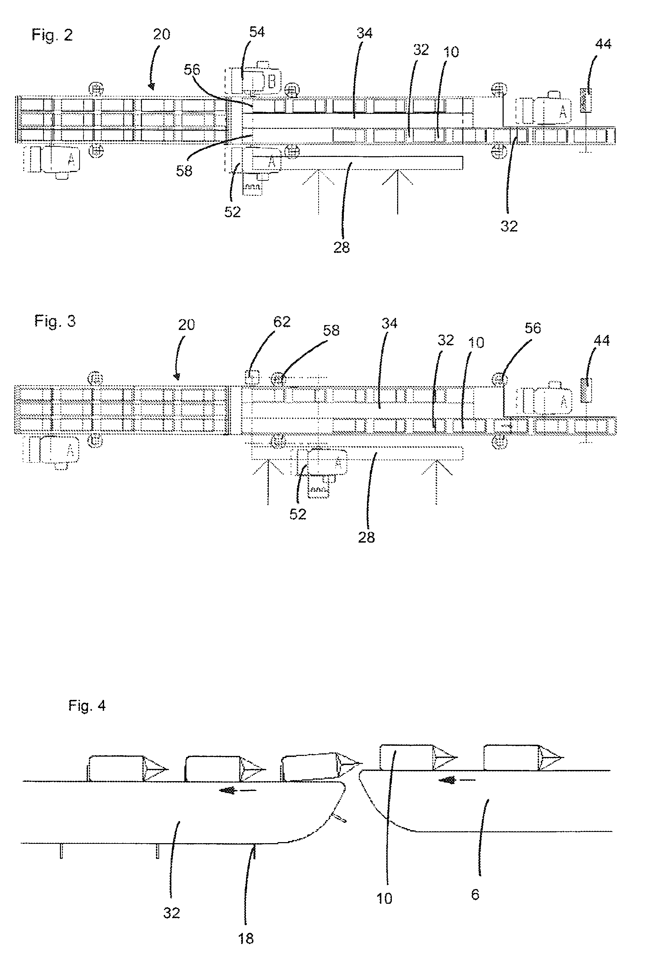

In Fig. 1 ist auch eine Abstandserfassungseinrichtung 42 in Form zweier gekreuzter Lichtschranken dargestellt, welche einen Abstand zwischen den einzelnen Stückgütern 10 misst. Mit Hilfe der Pufferungseinrichtung 4 können auch die Abstände zwischen den Stückgütern nach Wunsch erhöht werden. Es ist jedoch auch möglich, den Abstand dieser Stückgüter in dem Übergang zwischen den beiden Transporteinrichtungen 6 und 32 (vgl. Fig. 4) zu vergrößern. Auch wäre es möglich, die Transporteinrichtung 2 mehrteilig aufzubauen, das heißt, mehrere ggf. auch unabhängig voneinander steuerbare Transporteinrichtungen vorzusehen.

Das Bezugszeichen 44 in Fig. 1 bezieht sich auf eine Positionserfassungseinrichtung, welche die Position der einzelnen Stückgüter auf der Transporteinrichtung 6 prüft. In Abhängigkeit von der so ermittelten Positionen können die beiden Transporteinrichtungen 6 und 32 aufeinander synchronisiert werden, so dass die Stückgüter 10 korrekt von der zweiten Transporteinrichtung 6 auf die weitere Transporteinrichtung 32 übergeben werden. Man erkennt in Fig. 3, dass das Niveau der zweiten Transporteinrichtung 6 geringfügig höher liegt, als das der weiteren Transporteinrichtung 32.

Fig. 2 zeigt eine Zusammenstellungseinrichtung 12 in einer ersten Ausführungsform. Diese Zusammenstellungseinrichtung 12 weist dabei hier zwei voneinander getrennt antreibbare Transporteinrichtungen bzw. Transportbänder 32 und 34 auf, die parallel zueinander verlaufen. Das obere Transportband 34 ist hier breiter aufgeführt als das untere Transportband 32 und in der Lage, zwei Reihen von Stückgütern 10 aufzunehmen. Es wäre jedoch auch denkbar, dass das Transportband mehr oder weniger als zwei Reihen an Stückgütern 10 aufnimmt. Anstelle eines Transportbandes könnten hier auch Transportketten vorgesehen sein.

Das untere Transportband 32 erstreckt sich dabei - wie in Fig. 2 gezeigt - nach rechts weiter als das obere Transportband 34. An diesem unteren Transportband 32 werden die Stückgüter 10 mit vorbestimmten Abständen angeliefert. Sobald eine Reihe von beispielsweise sechs Stückgütern vorhanden ist, wird eine Verschiebeeinrichtung 28 betätigt, welche diese Reihe auf das obere Transportband 34 bzw. eine der beiden Linien dieses Transportbandes 34 befördert. Nachdem dies geschehen ist, kann eine weitere Gruppe von Stückgütern geliefert werden.

Die Verschiebeeinrichtung weist dabei bevorzugt eine kammartige Struktur auf, wobei die Abstandshalteeinrichtungen 18 durch Lücken dieser kammartigen Struktur hindurchtreten können. Es wäre jedoch auch denkbar, dass die Abstandshalteeinrichtungen 18 schwenkbar sind und unter der Bewegung der Verschiebeeinrichtung nachgeben.

Sobald die beiden Bänder 32 und 34 vollständig mit Stückgütern besetzt sind, kann die vollständige Stückgüterzusammenstellung in Fig. 2 nach links abtransportiert werden. Zu diesem Abtransport werden dabei zwei Antriebseinrichtungen 52 und 54 für die beiden Transportbänder 32 und 34 parallel bzw. synchron zueinander betrieben. Die Bezugszeichen 56 und 58 beziehen sich auf Wellen für die Transportbänder.

Fig. 3 zeigt eine weitere Ausführungsform einer erfindungsgemäßen Zusammenstellungseinrichtung. Der wesentliche Unterschied zu der in Fig. 2 gezeigten Ausführungsform besteht darin, dass hier lediglich eine Antriebseinrichtung 52 vorgesehen ist, zusätzlich jedoch eine Kupplungseinrichtung 62, welche das oder die beiden oberen Transportbänder 34 auf Wunsch an die Bewegung des unteren Transportbandes 32 koppelt. Nach dieser Kopplung können die zusammengestellten Stückgüter auch in Fig. 3 nach links transportiert werden.

Fig. 4 zeigt eine vergrößerte Darstellung eines Übergangsbereiches zwischen der zweiten Transporteinrichtung 6 und der weiteren Transporteinrichtung 32. Dabei werden die Stückgüter 10 auf dieser zweiten Transporteinrichtung 6 angeliefert und dabei diese beiden Transporteinrichtungen 6 und 32 derart synchron zueinander gedreht, dass die Stückgüter 10 jeweils in genauen Abständen, welche durch Abstandshalteeinrichtungen 18 festgelegt werden, gegeben sind. Sobald wieder eine Gruppe von sechs aufeinanderfolgenden Stückgütern 10 gebildet ist, kann diese von der weiteren Transporteinrichtung 32 auf das Transportband 34 der Stückgüterzusammenstellung 12 übergeben werden, wobei hierbei die Abstände eingehalten werden.

Während des Verschiebens der Gruppen an Stückgütern quer zu der Transportrichtung R (vgl. Pfeil Q in Fig. 1) kommt dabei das oben erwähnte Transportband 32 zum Stillstand. Entsprechend wird auch bevorzugt die zweite Transporteinrichtung 6 angehalten. In diesen Phasen wird die gezeigte Pufferungseinrichtung mit zusätzlichen Stückgütern 10 bestückt, das heißt, der Schlitten 38 bewegt sich in Fig. 1 nach rechts. Sobald wieder Stückgüter an die Zusammenstellungseinrichtung 12 übergeben werden, bewegt sich auch die Transporteinrichtung 6, und zwar bevorzugt mit einer höheren Transportgeschwindigkeit im Vergleich zu derjenigen der Transporteinrichtung 2. In diesen Phasen kann die Pufferungseinrichtung wieder zumindest teilweise entleert werden, das heißt, der Schlitten 38 wird wieder in Fig. 1 nach links verschoben, um auf diese Weise die Transportstrecke zu verkürzen.

Sämtliche in den Anmeldungsunterlagen offenbarte Merkmale werden als erfindungswesentlich beansprucht, sofern sie einzeln oder in Kombination gegenüber dem Stand der Technik neu sind.

### Bezugszeichenliste

- 1: Vorrichtung
- 2: erste Transporteinrichtung
- 4: Pufferungseinrichtung
- 5: Umlenkeinheit
- 6: zweite Transporteinrichtung
- 10: Stückgut
- 12: Zusammenstellungseinrichtung
- 18: Abstandshalteeinrichtung
- 20: Stückgutzusammenstellung
- 22: Transportstrecke
- 26: Transportstrecke
- 28: Verschiebeeinrichtung
- 32: unteres Transportband (Teil der Zusammenstellungseinrichtung)
- 34: oberes Transportband (Teil der Zusammenstellungseinrichtung)
- 38: Schlitten
- 42: Abstandserfassungseinrichtung
- 44: Positionserfassungseinrichtung
- 52, 54: Antriebseinrichtung
- 56, 58: Welle
- 62: Kupplungseinrichtung
- Q: Verschieberichtung
- T: Transportpfad
- R: Richtung
- B: Verschieberichtung des Schlittens 38

## Patentansprüche

1. Vorrichtung (1) zum Bilden von Stückgüterzusammenstellungen mit einer ersten Transporteinrichtung (2), welche die Stückgüter (10) entlang eines vorgegebenen Transportpfades (T) mit einer ersten Transportgeschwindigkeit (v1) transportiert, einer zweiten Transporteinrichtung (6), welche die Stückgüter entlang des vorgegebenen Transportpfades (T) mit einer zweiten Transportgeschwindigkeit (v2) transportiert und welche entlang des Transportpfades (T) stromabwärts bezüglich der ersten Transporteinrichtung (2) angeordnet ist und mit einer Zusammenstellungseinrichtung (12), welche entlang des Transportpfades (T) stromabwärts bezüglich der zweiten Transporteinrichtung (6) angeordnet ist und aus einer Vielzahl von Stückgütern (10) Stückgüterzusammenstellungen (20) bildet,
**dadurch gekennzeichnet, dass**
die Vorrichtung eine Pufferungseinrichtung (4) aufweist, welche die Stückgüter entlang einer veränderbaren Pufferstrecke (P) transportiert und welche zwischen der ersten Transporteinrichtung (2) und der zweiten Transporteinrichtung (6) angeordnet ist, wobei sich die erste Transportgeschwindigkeit (v1) und die zweite Transportgeschwindigkeit (v2) wenigstens zeitweise unterscheiden und die Pufferungseinrichtung (4) wenigstens zeitweise die durch unterschiedliche Geschwindigkeiten (v1, v2) entstehende Stückgüterströme aufnimmt, und wobei die Pufferungseinrichtung (4) dazu vorgesehen ist, Unterschiede in den Geschwindigkeiten (v1, v2), welche gewollt auftreten, um die Stückgüterzusammenstellung (20) zu bilden, auszugleichen.

2. Vorrichtung (1) nach Anspruch 1,
**dadurch gekennzeichnet, dass**
sich die erste Transportgeschwindigkeit (v1) und die zweite Transportgeschwindigkeit (v2) im regulären Arbeitsbetrieb wenigstens zeitweise unterscheiden.

3. Vorrichtung (1) nach wenigstens einem der vorangegangenen Ansprüche,
**dadurch gekennzeichnet, dass**
die zweite Transportgeschwindigkeit (v2) zeitweise größer ist als die erste Transport-geschwindigkelt (v1) und zeitweise kleiner ist als die erste Transportgeschwindigkelt.

4. Vorrichtung (1) nach wenigstens einem der vorangegangenen Ansprüche,
**dadurch gekennzeichnet, dass**
die Pufferungseinrichtung (4) entlang einer Transportstrecke (22) der ersten Transporteinrichtung (2) verschiebbar ist.

5. Vorrichtung (1) nach wenigstens einem der vorangegangenen Ansprüche,
**dadurch gekennzeichnet, dass**
die Pufferungseinrichtung (4) entlang einer Transportstrecke (26) der zweiten Transporteinrichtung (6) verschiebbar Ist.

6. Vorrichtung (1) nach wenigstens einem der vorangegangenen Ansprüche,
**dadurch gekennzeichnet, dass**
nach der zweiten Transporteinrichtung (6) eine weitere Transporteinrichtung (32) angeordnet ist.

7. Vorrichtung (1) nach Anspruch 6,
**dadurch gekennzeichnet, dass**
die weitere Transporteinrichtung (32) Abstandshalteeinrichtungen (18) aufweist, welche zwischen den Stückgütern konstante Abstände erzeugen.

8. Vorrichtung (1) nach wenigstens einem der vorangegangenen Ansprüche,
**dadurch gekennzeichnet, dass**
die Zusammenstellungseinrichtung (12) eine Verschiebeeinrichtung (28) aufweist, welche Gruppen von Stückgütern in einer von einer Transportrichtung (R) abweichenden Richtung verschiebt.

9. Vorrichtung (1) nach wenigstens einem der vorangegangenen Ansprüche,
**dadurch gekennzeichnet, dass**
die Zusammenstellungseinrichtung (12) wenigstens zwei unabhängig voneinander antreibbare Transportbänder (32, 34) aufweist.

10. Vorrichtung (1) nach wenigstens einem der vorangegangenen Ansprüche,
**dadurch gekennzeichnet, dass**
die Pufferungseinrichtung (4) einen verschiebbaren Schlitten (38) aufweist.

11. Vorrichtung (1) nach wenigstens einem der vorangegangenen Ansprüche,
**dadurch gekennzeichnet, dass**
die Vorrichtung (1) eine Abstandserfassungseinrichtung (42) aufweist, welche entlang des Transportpfads (T) stromaufwärts bezüglich der Pufferungseinrichtung (4) angeordnet ist und welche Abstände zwischen den Stückgütern (10) erfasst.

12. Vorrichtung (1) nach wenigstens einem der vorangegangenen Ansprüche,
**dadurch gekennzeichnet, dass**
die Vorrichtung (1) eine Positionserfassungseinrichtung (44) aufweist, welche entlang des Transportpfads (T) stromabwärts bezüglich der Pufferungseinrichtung (4) angeordnet ist und welche Positionen der Stückgüter (42) erfasst.

13. Verfahren zum Bilden von Stückgüterzusammenstellungen (20) wobei mit einer ersten Transporteinrichtung (2) die Stückgüter (10) entlang eines vorgegebenen Transportpfades (T) mit einer ersten Transportgeschwindigkeit (v1) transportiert werden und mit einer zweiten Transporteinrichtung (6), welche entlang des Transportpfades (T) stromabwärts bezüglich der ersten Transporteinrichtung (2) angeordnet ist, entlang des vorgegebenen Transportpfades (T) mit einer zweiten Transportgeschwindigkeit (v2) transportiert werden und wobei mit einer Zusammenstellungseinrichtung (12), welche entlang des Transportpfades (T) stromabwärts bezüglich der zweiten Transporteinrichtung (6) angeordnet ist, aus einer Vielzahl von Stückgütern (10) Stückgüterzusammenstellungen (20) gebildet werden,
**dadurch gekennzeichnet, dass**
die Stückgüter mit einer Pufferungseinrichtung (4), welche zwischen der ersten Transporteinrichtung (2) und der zweiten Transporteinrichtung (6) angeordnet ist, entlang einer veränderbaren Pufferstrecke (P) transportiert werden, wobei sich die erste Transportgeschwindigkeit (v1) und die zweite Transportgeschwindigkeit (v2) wenigstens zeitweise unterscheiden und die Pufferungseinrichtung (4) wenigstens zeitweise die durch unterschiedliche Transportgeschwindigkeiten (v1, v2) entstehenden Stückgüterströme aufnimmt, und wobei die Pufferungseinrichtung (4) dazu vorgesehen ist, Unterschiede In den Geschwindigkeiten (v1, v2), welche gewollt auftreten, um die Stückgüterzusammenstellung (20) zu bilden, auszugleichen.

14. Verfahren nach Anspruch 13,
**dadurch gekennzeichnet, dass**
die Pufferungseinrichtung (4) entlang des Transportpfads (T) verschoben wird.

15. Verfahren nach wenigstens einem der vorangegangenen Ansprüche 13 - 14, **dadurch gekennzeichnet, dass**
eine Transportbewegung der zweiten Transporteinrichtung (6) wenigstens zeitweise angehalten wird.

## Claims

1. Apparatus (1) for forming piece goods batches, comprising a first transport device (2) which transports the piece goods (10) along a predefined transport path (T) at a first transport speed (v1), a second transport device (6) which transports the piece goods along the predefined transport path (T) at a second transport speed (v2) and which is arranged downstream of the first transport device (2) along the transport path (T), and an assembling device (12) which is arranged downstream of the second transport device (6) along the transport path (T) and forms piece goods batches (20) from a plurality of piece goods (10), **characterised in that** the apparatus comprises a buffer device (4) which transports the piece goods along a variable buffer section (P) and which is arranged between the first transport device (2) and the second transport device (6), wherein the first transport speed (v1) and the second transport speed (v2) differ at least at times and the buffer device (4) at least at times receives the piece goods streams brought about as a result of different speeds (v1, v2) and wherein the buffer device (4) is provided to compensate differences in the speeds (v1, v2) which arise intentionally to form the piece good batches (20).

2. Apparatus (1) according to claim 1, **characterised in that** the first transport speed (v1) and the second transport speed (v2) differ at least at times in the regular operating mode.

3. Apparatus (1) according to at least one of the preceding claims, **characterised in that** the second transport speed (v2) is at times greater than the first transport speed (v1) and is at times lower than the first transport speed.

4. Apparatus (1) according to at least one of the preceding claims, **characterised in that** the buffer device (4) is displaceable along a transport section (22) of the first transport device (2).

5. Apparatus (1) according to at least one of the preceding claims, **characterised in that** the buffer device (4) is displaceable along a transport section (26) of the second transport device (6).

6. Apparatus (1) according to at least one of the preceding claims, **characterised in that** a further transport device (32) is arranged after the second transport device (6).

7. Apparatus (1) according to claim 6, **characterised in that** the further transport device (32) has spacer devices (18) which produce constant distances between the piece goods.

8. Apparatus (1) according to at least one of the preceding claims, **characterised in that** the assembling device (12) comprises a displacement device (28) which displaces groups of piece goods in a direction differing from a transport direction (R).

9. Apparatus (1) according to at least one of the preceding claims, **characterised in that** the assembling device (12) comprises at least two conveyor belts (32, 34) which can be driven independently of one another.

10. Apparatus (1) according to at least one of the preceding claims, **characterised in that** the buffer device (4) comprises a displaceable carriage (38).

11. Apparatus (1) according to at least one of the preceding claims, **characterised in that** the apparatus (1) comprises a distance sensing device (42) which is arranged upstream of the buffer device (4) along the transport path (T) and which detects distances between the piece goods (10).

12. Apparatus (1) according to at least one of the preceding claims, **characterised in that** the apparatus (1) comprises a position sensing device (44) which is arranged downstream of the buffer device (4) along the transport path (T) and which senses positions of the piece goods (42).

13. Method for forming piece goods batches (20), wherein the piece goods (10) are transported by a first transport device (2) along a predefined transport path (T) at a first transport speed (v1) and are transported by a second transport device (6) along the predefined transport path (T) at a second transport speed (v2), said second transport device being arranged downstream of the first transport device (2) along the transport path (T), and wherein piece goods batches (20) are formed from a plurality of piece goods (10) by an assembling device (12) which is arranged downstream of the second transport device (6) along the transport path (T), **characterised in that** the piece goods are transported along a variable buffer section (P) by a buffer device (4) which is arranged between the first transport device (2) and the second transport device (6), wherein the first transport speed (v1) and the second transport speed (v2) differ at least at times and the buffer device (4) at least at times receives the piece goods streams brought about as a result of different transport speeds (v1, v2) and wherein the buffer device (4) is provided to compensate differences in the speeds (v1, v2) which arise intentionally to form the piece good batches (20).

14. Method according to claim 13, **characterised in that** the buffer device (4) is displaced along the transport path (T).

15. Method according to at least one of the preceding claims 13 to 14, **characterised in that** a transport movement of the second transport device (6) is stopped at least intermittently.

## Revendications

1. Installation (1) permettant de constituer des groupes d'articles avec un premier dispositif de transport (2) convoyant les articles (10) avec une première vitesse de transport (v1) sur un chemin de transport (T) défini, un deuxième dispositif de transport (6) convoyant les articles avec une deuxième vitesse de transport (v2) sur le chemin de transport (T) défini, et situé en aval du premier dispositif de transport (2) sur le chemin de transport (T), et avec un dispositif de groupement (12) situé en aval du deuxième dispositif de transport (6) sur le chemin de transport (T) et constituant des groupes d'articles (20) à partir d'une pluralité d'articles (10),
**caractérisée en ce que**
ladite installation comprend un dispositif de mise en tampon (4) transportant les articles sur un trajet tampon (P) variable et situé entre le premier dispositif de transport (2) et le deuxième dispositif de transport (6), la première vitesse de transport (v1) et la deuxième vitesse de transport (v2) étant au moins temporairement différentes, le dispositif de mise en tampon (4) absorbant au moins temporairement les flux d'articles générés par les vitesses (v1, v2) différentes, et le dispositif de mise en tampon (4) étant prévu pour égaliser les différences de vitesses (v1, v2) produites volontairement pour constituer le groupe d'article (20).

2. Installation (1) selon la revendication 1, **caractérisée en ce que**
la première vitesse de transport (v1) et la deuxième vitesse de transport (v2) sont au moins temporairement différentes en mode de fonctionnement régulier.

3. Installation (1) selon au moins une des revendications précédentes, **caractérisée en ce que**
la deuxième vitesse de transport (v2) est temporairement supérieure à la première vitesse de transport (v1) et temporairement inférieure à la première vitesse de transport.

4. Installation (1) selon au moins une des revendications précédentes, **caractérisée en ce que**
le dispositif de mise en tampon (4) est déplaçable sur un trajet de transport (22) du premier dispositif de transport (2).

5. Installation (1) selon au moins une des revendications précédentes, **caractérisée en ce que**
le dispositif de mise en tampon (4) est déplaçable sur un trajet de transport (26) du deuxième dispositif de transport (6).

6. Installation (1) selon au moins une des revendications précédentes, **caractérisée en ce qu'**
un autre dispositif de transport (32) est présenté après le deuxième dispositif de transport (6).

7. Installation (1) selon la revendication 6, **caractérisée en ce que** l'autre dispositif de transport (32) comporte des dispositifs de maintien d'espacement (18) créant des espacements constants entre les articles.

8. Installation (1) selon au moins une des revendications précédentes, **caractérisée en ce que**
le dispositif de groupement (12) comprend un dispositif de déplacement (28) déplaçant les groupes d'articles dans une direction différente d'une direction de transport (R).

9. Installation (1) selon au moins une des revendications précédentes, **caractérisée en ce que**
le dispositif de groupement (12) comporte au moins deux bandes convoyeuses (32, 34) entraînables indépendamment l'une de l'autre.

10. Installation (1) selon au moins une des revendications précédentes, **caractérisée en ce que**
le dispositif de mise en tampon (4) comprend un chariot (38) déplaçable.

11. Installation (1) selon au moins une des revendications précédentes, **caractérisée en ce que**
ladite installation (1) comporte un dispositif de détection d'espacement (42) disposé en amont du dispositif de mise en tampon (4) sur le chemin de transport (T) et qui détecte les espacements entre les articles (10).

12. Installation (1) selon au moins une des revendications précédentes, **caractérisée en ce que**
ladite installation (1) comporte un dispositif de détection de position (44) disposé en aval du dispositif de mise en tampon (4) sur le chemin de transport (T) et qui détecte les positions des articles (42).

13. Procédé pour constituer des groupes d'articles (20), où les articles (10) sont convoyés par un premier dispositif de transport (2) avec une première vitesse de transport (v1) sur un chemin de transport (T) défini, et convoyés avec une deuxième vitesse de transport (v2) sur le chemin de transport (T) défini par un deuxième dispositif de transport (6), situé en aval du premier dispositif de transport (2) sur le chemin de transport (T), et où des groupes d'articles (20) sont constitués à partir d'une pluralité d'articles (10) par un dispositif de groupement (12) situé en aval du deuxième dispositif de transport (6) sur le chemin de transport (T),
**caractérisé en ce que**
les articles sont transportés sur un trajet tampon (P) variable par un dispositif de mise en tampon (4), situé entre le premier dispositif de transport (2) et le deuxième dispositif de transport (6), la première vitesse de transport (v1) et la deuxième vitesse de transport (v2) étant au moins temporairement différentes, le dispositif de mise en tampon (4) absorbant au moins temporairement les flux d'articles générés par les vitesses (v1, v2) différentes, et le dispositif de mise en tampon (4) étant prévu pour égaliser les différences de vitesses (v1, v2) produites volontairement pour constituer le groupe d'article (20).

14. Procédé selon la revendication 13, **caractérisé en ce que**
le dispositif de mise en tampon (4) est déplacé sur le chemin de transport (T).

15. Procédé selon au moins une des revendications 13 et 14, **caractérisé en ce qu'**
un convoyage du deuxième dispositif de transport (6) est au moins temporairement arrêté.
